(19) Europäisches Patentamt European Patent Office Office européen des brevets

(11) **EP 4 435 396 B1**

(12) **EUROPEAN PATENT SPECIFICATION**

(45) Date of publication and mention of the grant of the patent:
**10.12.2025 Bulletin 2025/50**

(21) Application number: **23162849.6**

(22) Date of filing: **20.03.2023**

(51) International Patent Classification (IPC):
*G01K 7/42* *(2006.01)*

(52) Cooperative Patent Classification (CPC):
**G01K 7/427**

(54) **A METHOD FOR DETERMINING TEMPERATURE INFORMATION, OR INFORMATION RELATED TO TEMPERATURE INFORMATION, RELATED TO A STATIC ELECTRIC INDUCTION DEVICE ASSEMBLY**

VERFAHREN ZUR BESTIMMUNG VON TEMPERATURINFORMATIONEN ODER INFORMATIONEN IM ZUSAMMENHANG MIT TEMPERATURINFORMATIONEN IN BEZUG AUF EINE STATISCHE ELEKTRISCHE INDUKTIONSVORRICHTUNGSANORDNUNG

PROCÉDÉ DE DÉTERMINATION D'INFORMATIONS DE TEMPÉRATURE, OU D'INFORMATIONS RELATIVES À DES INFORMATIONS DE TEMPÉRATURE, RELATIVES À UN ENSEMBLE DE DISPOSITIF À INDUCTION ÉLECTRIQUE STATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**25.09.2024 Bulletin 2024/39**

(73) Proprietor: **Hitachi Energy Ltd**
**8050 Zürich (CH)**

(72) Inventor: **LANERYD, Tor**
**745 38 Enköping (SE)**

(74) Representative: **Valea AB**
**Box 1098**
**405 23 Göteborg (SE)**

(56) References cited:
**CN-A- 105 550 472      US-A1- 2022 285 070**

**Description**

TECHNICAL FIELD

The present invention relates to a method for determining temperature information, or information related to temperature information, related to a static electric induction device assembly. Moreover, the present invention relates to each one of a computer program product, a non-transitory computer-readable storage medium and a control unit.

BACKGROUND OF THE INVENTION

In a static electric induction device assembly, such as an assembly comprising a transformer and/or a shunt reactor, there is generally a desire to determine the temperature of at least a portion of a static electric induction device forming part of such an assembly.

Purely by way of example, it may be desired to determine a so-called hotspot temperature of the static electric induction device. A hotspot generally relates to the hottest portion, or at least one of the hottest portions, of the static electric induction device. Information pertaining to the hotspot temperature may for instance be relevant when assessing an insulation ageing of a static electric induction device.

However, it may be challenging to measure a temperature in a desired portion of the static electric induction device. For instance, should a temperature sensor, such as a thermometer or the like, be placed at or by the hotspot, there is a risk that the presence of such a temperature sensor may impair the cooling of the hotspot, for instance by impairing the flow of a coolant around the hotspot.

CN 105 550 472 A discloses a method for predicting the hot spot temperature of a transformer winding based on a neural network. The transformer is submerged in a cooling liquid. Under natural oil circulation cooling, the hot spot temperature is equal to the sum of the ambient temperature, the temperature rise of the top oil, and the temperature rise of the hot spot temperature to the top oil temperature; while the forced oil circulation is cooled, the hot spot temperature is equal to the ambient temperature, i.e. the bottom layer. The temperature rise of the oil is due to the temperature rise of the top oil temperature of the winding, the temperature rise of the bottom oil, and the temperature rise of the hot spot temperature of the winding; the forced oil circulation is guided to cool, and the calculation of the hot spot temperature is similar to that of the forced oil circulation cooling.

SUMMARY OF THE INVENTION

In view of the above, an object of a first aspect of the present invention is to determine temperature information related to a static electric induction device assembly in a straightforward manner. The above object is achieved by a method according to claim 1.

As such, the first object of the present invention relates to a method for determining temperature information, or information related to temperature information, related to a static electric induction device assembly. The static electric induction device assembly has a vertical extension in a vertical direction.

The static electric induction device assembly comprises an enclosure, a static electric induction device and a liquid, whereby the enclosure accommodates the static electric induction device and the liquid such that the static electric induction device is at least partially, preferably fully, submerged into the liquid. The static electric induction device comprises a static electric induction device portion that is submerged into the liquid. The static electric induction device assembly further comprises an enclosing member.

The static electric induction device is at least partially enclosed by the enclosing member, wherein at least one cooling duct is formed between the static electric induction device and the enclosing member and/or wherein the at least one cooling duct extends at least partially through the static electric induction device. The at least one cooling duct is at least partially delimited by the static electric induction device portion. The at least one cooling duct comprises a lower inlet and an upper outlet, as seen in the vertical direction, wherein each one of the lower inlet and the upper outlet is in fluid communication with the liquid. The at least one cooling duct is adapted to convey the liquid from the lower inlet to the upper outlet.

The method comprises determining a liquid pressure difference between a liquid pressure at the upper outlet and a liquid pressure at the lower inlet. The method comprises performing the following for at least the static electric induction device portion:

-    determining a heat loss value, indicative of a heat loss for the static electric induction device portion, the static electric induction device portion having a vertical static electric induction device portion position in the vertical direction;

-    determining a liquid temperature value, indicative of a temperature of the liquid in the vertical static electric induction device portion position, and

- determining a temperature, or information related to temperature information, of the static electric induction device portion using the liquid pressure difference, the heat loss value and the liquid temperature value.

The above implies that the temperature of the static electric induction device portion may be determined in a straightforward manner. For instance, the above recited method implies that the temperature of the static electric induction device portion may be determined without necessarily employing a temperature sensor that is located at or by the static electric induction device portion.

Optionally, the method comprises determining a temperature profile indicative of a temperature of the liquid inside the enclosure but outside the enclosing member at a plurality of different vertical positions between an upper outlet vertical position of the upper outlet and a lower inlet vertical position of the lower inlet.

The temperature profile indicated above may be useful when determining e.g. the temperature, or information related to temperature information, of the static electric induction device portion. Moreover, since the temperature profile is indicative of the temperature outside the enclosing member, the temperature profile may be determined with a low risk for negatively affecting e.g. the flow of liquid around the static electric induction device portion.

Optionally, the step of determining the liquid temperature value comprises using the temperature profile and the vertical static electric induction device portion position in the vertical direction of the static electric induction device portion.

The above implies that the liquid temperature value may be determined in a straightforward manner.

Optionally, the feature of determining the temperature profile comprises using a plurality of temperature sensors arranged inside the enclosure but outside the enclosing member between the upper outlet vertical position and the lower inlet vertical position.

Using a plurality of temperature sensors arranged outside the enclosing member implies an appropriately low risk that the temperature sensor may impair the liquid flow around the static electric induction device portion.

Optionally, the feature of determining the temperature profile comprises the following:

- determining measured temperature data using a measurement assembly, the measured temperature data comprising a temperature in each one of a plurality of different locations of the static electric induction device assembly as a function of time for a reference time range when the static electric induction device assembly is in a condition in which at least a portion of the static electric induction device generates heat during at least a portion of the reference time range,
- generating a temperature model for estimated temperature data, the estimated temperature data corresponding to an estimated temperature in each one of the plurality of different locations of the static electric induction device assembly as a function of time, the temperature model comprising a learning model representing the estimated temperature data as well as the measured temperature data, and
- training the learning model using the measured temperature data to thereby obtain the temperature model, and
- determining the temperature profile using the temperature model.

The above implies a versatile implementation for determining the temperature profile.

Optionally, the learning model comprises a neural network, preferably a multilayer neural network.

Optionally, the measurement assembly comprises a fibre optic sensor that is located within the enclosing member. Preferably, the static electric induction device comprises a winding and the fibre optic sensor is at least partially located in the winding.

The use of a fibre optic sensor implies an accurate determination of the measured temperature data.

Optionally, the step of determining the liquid pressure difference between the liquid pressure at the upper outlet and the liquid pressure at the lower inlet comprises using the temperature profile and information relating to a density of the liquid as a function of temperature.

Using the temperature profile for determining the liquid pressure difference implies that the liquid pressure difference may be determined without necessarily requiring the use of e.g. pressure sensors. Moreover, using the temperature profile implies that appropriately accurate values of the liquid pressure difference may be obtained.

Optionally, the method comprises determining a fluid flow rate of the liquid flowing in the at least one cooling duct on the basis of the liquid pressure difference and a factor indicative of the flow resistance of the duct.

The above implementation for determining the fluid flow rate may provide appropriately accurate results.

Optionally, the step of determining the heat loss value comprises determining a value indicative of an electric power fed to the static electric induction device portion.

The heat loss value may be proportional to the electric power fed to the static electric induction device portion. As such, determining a value indicative of an electric power fed to the static electric induction device portion for determining the heat loss value implies that the heat loss value may be determined with an appropriate accuracy.

Optionally, the step of determining the temperature of the static electric induction device portion using the liquid pressure difference, the heat loss value and the liquid temperature value comprises determining a heat transfer coefficient between the static electric induction device portion and the liquid. The heat transfer coefficient is a function of the fluid flow rate, wherein the temperature of the static electric induction device portion is determined as the sum of the liquid temperature value and a parameter proportional to the ratio between the heat loss value and the heat transfer coefficient.

Optionally, the static electric induction device comprises a winding, wherein the static electric induction device portion is a portion of the winding.

Optionally, the winding comprises a plurality of discs, the method comprising performing the method according to any one of the preceding claims for each one of a set of discs of the plurality of discs.

Optionally, the static electric induction device portion is associated with an area of the static electric induction device with a relatively high temperature in comparison to its surroundings.

Optionally, the liquid comprises, preferably is constituted by, a dielectric liquid.

Optionally, the static electric induction device comprises a transformer and/or a shunt reactor.

A second aspect of the present invention relates to a computer program product comprising program code for performing, when executed by a processor device, the method of the first aspect of the present invention.

A third aspect of the present invention relates to a non-transitory computer-readable storage medium comprising instructions, which when executed by a processor device, cause the processor device to perform the method of the first aspect of the present invention.

A fourth aspect of the present invention relates to a control unit arranged to perform the method of the first aspect of the present invention.

BRIEF DESCRIPTION OF THE DRAWINGS

With reference to the appended drawings, below follows a more detailed description of embodiments of the disclosure cited as examples.

In the drawings:

Fig. 1    is a schematic illustration of a static electric induction device assembly;

Fig. 2    is a schematic illustration of a static electric induction device and graphs of a heat loss value and a temperature of a liquid, each one as a function of a vertical position along the static electric induction device, and

Fig. 3    is a schematic illustration of a portion of an implementation of a static electric induction device.

DETAILED DESCRIPTION OF PREFERRED EMBODIMENTS

Preferred embodiments of the present disclosure will be discussed hereinbelow with reference to the appended drawings.

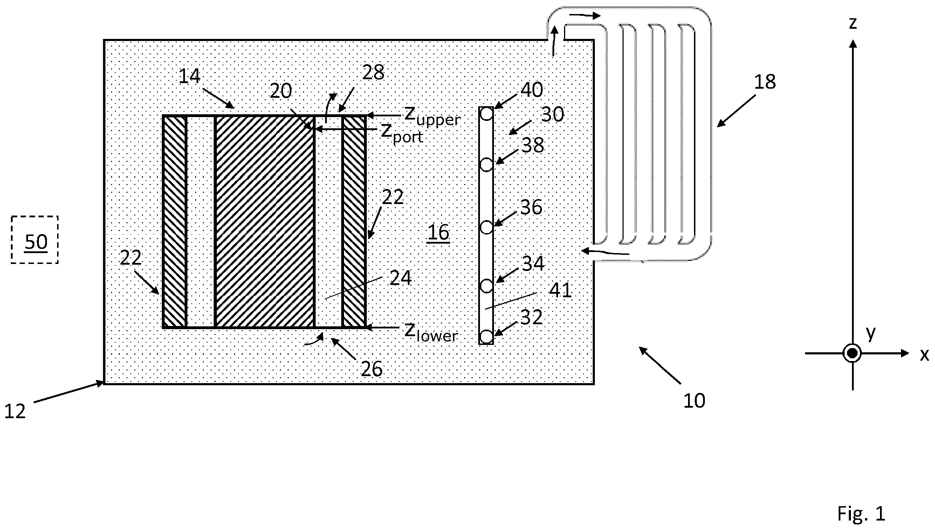

Fig. 1 schematically illustrates an implementation of a static electric induction device assembly 10. The static electric induction device assembly 10 has a vertical extension in a vertical direction z. Moreover, as indicated in Fig. 1, the static electric induction device assembly 10 may also have an extension in a longitudinal direction x and an transversal direction y. The longitudinal direction x and the transversal direction y may form a horizontal plane.

As indicated in Fig. 1, the static electric induction device assembly 10 comprises an enclosure 12, a static electric induction device 14 and a liquid 16. Purely by way of example, the enclosure 12 may be referred to as a tank. Moreover, again purely be way of example, the enclosure 12 may comprise a radiator 18. The radiator 18 may be in fluid communication with the interior of the enclosure 12 such that liquid 16 may be conveyed through the radiator 18 whereby the thus conveyed liquid may be cooled and returned to the interior of the enclosure 12. The above capability is indicated by arrows in Fig. 1.

Moreover, as indicated in Fig. 1, the enclosure 12 accommodates the static electric induction device 14 and the liquid 16 such that the static electric induction device 14 is at least partially, preferably fully, submerged into the liquid 16. Moreover, as indicated in Fig. 1 the static electric induction device 14 comprises a static electric induction device portion 20 which is submerged into the liquid 16. Generally, and as indicated in Fig. 1, the static electric induction device portion 20 is fully submerged into the liquid 16. Moreover, as indicated in Fig. 1, the static electric induction device portion 20 has a vertical static electric induction device portion position $z_{port}$ in the vertical direction z.

The static electric induction device assembly 10 further comprises an enclosing member 22. At least one cooling duct 24 is formed between the static electric induction device 14 and the enclosing member 22 and/or the at least one cooling duct 24 extends at least partially through the static electric induction device 14. The at least one cooling duct 24 is at least partially delimited by the static electric induction device portion 20.

In the Fig. 1 implementation of the static electric induction device assembly 10, the at least one cooling duct 24 is formed between the static electric induction device 14 and the enclosing member 22. However, it is also envisaged that in other implementations of the static electric induction device assembly 10, the at least one cooling duct 24 may extend through one or more other portions of the static electric induction device assembly 10. As a non-limiting example, the at least one cooling duct 24 may extend at least partially through the static electric induction device 14, such as at least partially through a core (not shown) of the static electric induction device 14.

The at least one cooling duct 24 comprises a lower inlet 26 and an upper outlet 28, as seen in the vertical direction z, wherein each one of the lower inlet 26 and the upper outlet 28 is in fluid communication with the liquid 16. The at least one cooling duct 24 is adapted to convey the liquid 16 from the lower inlet 26 to the upper outlet 28.

Moreover, though purely by way of example, the Fig. 1 implementation of the static electric induction device assembly 10 comprises a temperature sensor assembly 30, details of which will be discussed further hereinbelow. However, it is also envisaged that other implementations of the static electric induction device assembly 10 need not necessarily comprise a temperature sensor assembly 30.

As a non-limiting example, the liquid 16 may comprise, preferably be constituted by, a dielectric liquid, such as a mineral oil.

Moreover, though purely by way of example, the static electric induction device 14 may comprise, or even be constituted by, a transformer or a shunt reactor.

The first object of the present invention relates to a method for determining temperature information, or information related to temperature information, related to a static electric induction device assembly 10. In particular, the first object of the present invention relates to a method for determining the temperature $T_{port}$, or information related to temperature information, of the static electric induction device portion 20.

Purely by way of example, the static electric induction device portion 20 may be associated with an area of the static electric induction device 14 with a relatively high temperature in comparison to its surroundings. As a non-limiting example, the static electric induction device portion 20 may be a so called hotspot of the static electric induction device 14.

The method comprises determining a liquid pressure difference $\Delta p$ between a liquid pressure at the upper outlet 28 and a liquid pressure at the lower inlet 26. Purely by way of example, such a liquid pressure difference $\Delta p$ may be determined using pressure sensors (not shown in Fig. 1). Alternatively, as will be discussed further hereinbelow, the liquid pressure difference $\Delta p$ may be determined using information indicative of the temperature of the liquid 16.

The method according to the first aspect of the present invention comprises performing the following for at least the static electric induction device portion 20:

- determining a heat loss value Q, indicative of a heat loss for the static electric induction device portion 20, the static electric induction device portion 20 having a vertical static electric induction device portion position $z_{port}$ in the vertical direction z,

- determining a liquid temperature value $T_{liq}(z_{port})$, indicative of a temperature of the liquid 16 in the vertical static electric induction device portion position $z_{port}$,

- determining a temperature $T_{port}$, or information related to temperature information, of the static electric induction device portion 20 using the liquid pressure difference $\Delta p$, the heat loss value Q and the liquid temperature value $T_{liq}(z_{port})$.

The liquid temperature value $T_{liq}(z_{port})$, indicative of a temperature of the liquid 16 in the vertical static electric induction device portion position $z_{port}$, may be determined in a plurality of different ways. As a non-limiting example, the liquid temperature value $T_{liq}(z_{port})$ may be determined using a single temperature sensor, such as thermometer, adapted to measure the temperature of the liquid 16 in the vertical static electric induction device portion position $z_{port}$.

However, purely by way of example, the method may comprise determining a temperature profile indicative of a temperature of the liquid 16 inside the enclosure 12 but outside the enclosing member 22 at a plurality of different vertical positions between an upper outlet vertical position $z_{upper}$ of the upper outlet 28 and a lower inlet vertical position $z_{lower}$ of the lower inlet 26. Purely by way of example, the temperature profile may be indicative of a temperature of the liquid 16 inside the enclosure 12 but at least 10 mm, as seen in a horizontal direction in the horizontal plane formed by the longitudinal direction x and the transversal direction y, outside the enclosing member 22.

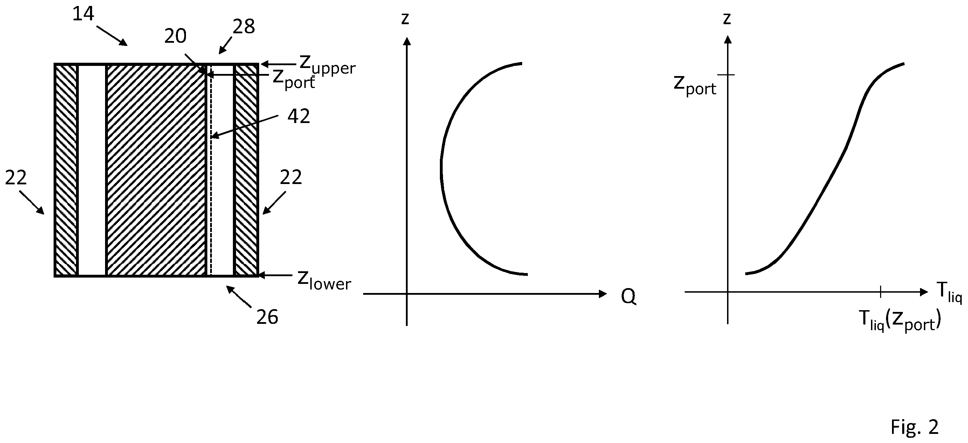

To this end, reference is made to Fig. 2 illustrating the temperature $T_{liq}$ of the liquid 16 in the enclosure 12 as a function of the vertical position z. Since colder liquid has a higher density than hotter liquid, the temperature profile is indicative of a temperature $T_{liq}$ that increases with an increasing vertical position z.

The temperature profile exemplified in Fig. 2 may be used for a plurality of purposes. As a non-limiting example, the step of determining the liquid temperature value $T_{liq}(z_{port})$ may comprise using the temperature profile and the vertical static electric induction device portion position $z_{port}$ in the vertical direction z of the static electric induction device portion 20. The above example is indicated in Fig. 2, indicating the liquid temperature value $T_{liq}(z_{port})$. Purely by way of example, the liquid temperature value $T_{liq}(z_{port})$ may be determined by interpolating values of the temperature profile for different vertical positions in order to obtain the liquid temperature value $T_{liq}(z_{port})$ at the vertical static electric induction device portion position $z_{port}$.

The temperature profile may be determined in a plurality of different ways. As a non-limiting example, the feature of determining the temperature profile may comprise using a plurality of temperature sensors arranged inside the enclosure 12 but outside the enclosing member 22 between the upper outlet vertical position $z_{upper}$ and the lower inlet vertical position $z_{lower}$.

To this end, reference is made to Fig. 1 again illustrating an implementation of the static electric induction device assembly 10 comprising a temperature sensor assembly 30. The Fig.1 temperature sensor assembly 30 comprises a plurality of temperature sensors 32, 34, 36, 38, 40 located at different vertical positions between the outlet vertical position $z_{upper}$ and the lower inlet vertical position $z_{lower}$. As non-limiting examples, each one of the temperature sensors 32, 34, 36, 38, 40 could be any one of the following type of sensors: thermocouples, thermistors, resistance thermometers and fiber optic temperature sensors.

As a non-limiting example, the temperature sensor assembly 30 may comprise an elongate member 41, such as a stick, to which each one of the temperature sensors 32, 34, 36, 38, 40 is attached. Purely by way of example, the elongate member 41 may be made of an insulating material.

Purely by way of example, the temperature sensor assembly 30 may be located outside the enclosing member 22 such that a minimum distance, as seen in a horizontal direction in the horizontal plane formed by the longitudinal direction x and the transversal direction y, between the enclosing member 22 and the temperature sensor assembly 30 is at least 10 mm. The distance of at least 10 mm can be used for any embodiment of the present invention.

However, it should be noted that the temperature profile need not be determined using temperature sensors 32, 34, 36, 38, 40 as indicated above.

To this end, though purely by way of example, the feature of determining the temperature profile may comprise the following:

- determining measured temperature data using a measurement assembly (42, see Fig. 2), the measured temperature data comprising a temperature in each one of a plurality of different locations of the static electric induction device assembly as a function of time for a reference time range when the static electric induction device assembly is in a condition in which at least a portion of the static electric induction device generates heat during at least a portion of the reference time range,
- generating a temperature model for estimated temperature data, the estimated temperature data corresponding to an estimated temperature in each one of the plurality of different locations of the static electric induction device assembly as a function of time, the temperature model comprising a learning model representing the estimated temperature data as well as the measured temperature data, and
- training the learning model using the measured temperature data to thereby obtain the temperature model,
- determining the temperature profile using the temperature model.

As a non-limiting example, the learning model may comprise a neural network (not shown), preferably a multilayer neural network.

Purely by way of example, the feature of determining the temperature profile using a learning model that comprises a neural network may use the learning model for solving a partial differential equation such as the partial differential equation presented below:

$$\frac{\partial T}{\partial t} - D(T)\nabla^2 T = q(I(t), T) - T \qquad \text{Eq. 1}$$

wherein:

$T = T(x, t)$ represents a temperature in each one of a plurality of different locations (x) of the liquid 16 as function of time (t);

$D(T)$ represents a temperature dependent material property, such as heat conductivity, of at least a portion of the enclosure 12, and

$q(I(t), T)$ represents heat generated by the static electric induction device 14.

It should be noted that the above partial differential equation according to Eq. 1 merely serves as an example of a partial differential equation that can be used for determining the temperature model for estimated temperature data. In other implementations of determining the temperature profile, the partial differential equation may include more terms such as for instance additional source terms. As non-limiting examples, an additional source term may relate to heat losses through a wall of the enclosure 12 and/or stray losses in metallic parts of the static electric induction device 14.

With reference to Fig. 2, the measurement assembly 42 may comprise a fibre optic sensor that is located within the enclosing member 22. Preferably, the static electric induction device comprises a winding (not shown in Fig. 2) and the fibre optic sensor is at least partially located in the winding. Alternatively, as a non-limiting example, the measurement assembly 42 may comprise a temperature sensor (not shown) for measuring a temperature of the liquid 16 in one or more locations within the enclosure 12, such as an uppermost position of the enclosure 12. As another non-limiting alternative, the measurement assembly 42 may comprise a temperature sensor adapted to measure the temperature ambient of the enclosure 12. Moreover, purely by way of example, the measurement assembly 42 may comprise a thermal camera (not shown) adapted to capture thermal images of an outer side of the enclosure 12 or thermocouples attached to the outer side of the enclosure 12. Purely by way of example, the measurement assembly 42 may comprise one or more of the examples presented above.

Irrespectively of how the temperature profile has been determined, the step of determining the liquid pressure difference $\Delta p$ between the liquid pressure at the upper outlet 28 and the liquid pressure at the lower inlet 26 may comprise using the temperature profile and information relating to a density of the liquid as a function of temperature.

Purely by way of example, the liquid pressure difference $\Delta p$ may be determined in accordance with the following:

$$\Delta p = \int_{z_{lower}}^{z_{upper}} g\delta(z)dz \qquad \text{Eq. 2}$$

wherein:

g is the gravitational acceleration, and
$\delta(z) = \delta(T(z))$ is the density of the liquid as a function of the temperature of the liquid.

Moreover, the method of the first aspect of the present invention may comprise determining a fluid flow rate of the liquid flowing in the at least one cooling duct on the basis of the liquid pressure difference $\Delta p$ and a factor k indicative of the flow resistance of the duct.

As a non-limiting example, the fluid flow rate may be a volumetric flow rate $Q_v$ (for instance expressed in terms of volume per time unit such a $m^3/s$) that can be determined in accordance with the following:

$$Q_v \sim \left(\frac{\Delta p}{k}\right)^n \qquad \text{Eq. 3}$$

wherein the exponent n is in the range of 0.5 - 1 (such that $0.5 \leq n \leq 1$) and
wherein the value of the exponent n depends on the implementation of the cooling duct 24. As a non-limiting example, the exponent n may equal 0.5 when the cooling duct 24 is a straight single duct and the exponent n may approach or even be equal to 1 for two parallel ducts.

As regards the heat loss value Q, indicative of a heat loss for the static electric induction device portion 20, the step of determining the heat loss value Q may comprise determining a value P indicative of an electric power fed to the static electric induction device portion 20. Purely by way of example, the value P indicative of an electric power fed to the static electric induction device portion 20 may be expressed as the electrical power (e.g. expressed in W or kW) actually fed to the electric power fed to the static electric induction device portion 20. As another non-limiting alternative, the value P indicative of an electric power fed to the static electric induction device portion 20 may be expressed as the electrical current component I (e.g. expressed in A) of the electric power actually fed to the electric power fed to the static electric induction device portion 20. The latter example may use the assumption that the voltage U is known, possibly even fixed.

Fig. 2 illustrates a profile of the heat loss value Q as a function of the vertical position z. Purely by way of example, the profile of the heat loss value Q may have been determined by determining a value P indicative of an electric power fed to the static electric induction device 14. As may be gleaned from Fig. 2, the heat loss value Q may be larger at the vertical uppermost and lowermost portions of the static electric induction device 14 than in a vertical centre portion of the static electric induction device 14.

Moreover, the profile of the heat loss value Q and the temperature profile in Fig. 2 indicate that a static electric induction device portion that is associated with an area of the static electric induction device with a relatively high temperature in comparison to its surroundings is often found in the vertical uppermost portion of the static electric induction device 14. This is since the vertical uppermost portion is associated with a relatively high heat loss value Q as well as a relatively high liquid temperature. As such, the relatively hot liquid at the vertical uppermost portion of the static electric induction device 14 may only cool the vertical uppermost portion of the static electric induction device 14 to a limited extent, whereby the vertical uppermost portion of the static electric induction device 14 can become relatively hot. As such, any hotspot of the static electric induction device 14 is generally found in the uppermost portion of the static electric induction device 14.

As a non-limiting example, the step of determining the temperature $T_{port}$ of the static electric induction device portion 20 using the liquid pressure difference $\Delta p$, the heat loss value Q and the liquid temperature value $T_{liq}(z_{port})$ may comprise determining a heat transfer coefficient h between the static electric induction device portion 14 and the liquid 16.

The heat transfer coefficient h is a function of the fluid flow rate $Q_v$. Purely by way of example, a value of the heat transfer coefficient h may be determined using a look-up table using the current fluid flow rate $Q_v$. As a non-limiting example, such a look-up table may be dependent on the material of the static electric induction device portion 20. The temperature $T_{port}$ of the static electric induction device portion 20 is determined as the sum of the liquid temperature value $T_{liq}(z_{port})$ and a parameter proportional to the ratio between the heat loss value Q and the heat transfer coefficient h.

As a non-limiting example, the temperature $T_{port}$ of the static electric induction device portion 20 may be determined in accordance with the following:

$$T_{port} = T_{liq}(z_{port}) + \frac{Q}{hA} \qquad \text{Eq. 4}$$

wherein the factor A may be indicative of the cooling surface area of the static electric induction device portion 20.

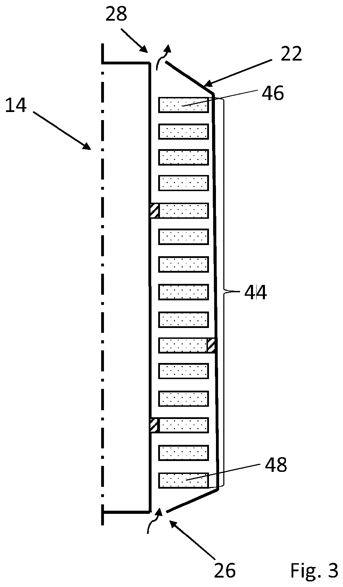

The static electric induction device 14 may be implemented in a plurality of different ways. With reference to Fig. 3, though purely by way of example, the static electric induction device may comprise a winding 44, wherein the static electric induction device portion is a portion of the winding.

In fact, in the Fig. 3 implementation of the static electric induction device 14, the winding 44 comprises a plurality of discs 46, 48. Moreover, as indicated in Fig. 3, the liquid may be adapted to flow from the lower inlet 26 and an upper outlet 28 and thus pass one or more sides of each one of the plurality of discs 46, 48. In the Fig. 3 implementation of the static electric induction device 14, the hotspot of the of the static electric induction device 14 may be associated with the uppermost disc 46. As such, in the fig. 3 implementation, the static electric induction device portion 20 may form part of, or equal, the uppermost disc.

However, in other embodiments of the first aspect of the present invention, the method may comprise determining the temperature of each one of a set of discs of the plurality of discs 46, 48.

A second aspect of the present invention relates to a computer program product comprising program code for performing, when executed by a processor device, the method of the first aspect of the present invention.

A third aspect of the present invention relates to a non-transitory computer-readable storage medium comprising instructions, which when executed by a processor device, cause the processor device to perform the method of the first aspect of the present invention.

Moreover, it should be noted that a fourth aspect of the present invention relates to a control unit 50, see Fig. 1, arranged to perform the method of the first aspect of the present invention. To this end, though purely by way of example, the control unit 50 may be adapted to receive information from one or more portions of the static electric induction device assembly 10. As a non-limiting example, with reference to the Fig. 1 embodiment, the control unit 50 may be adapted to receive information from the temperature sensor assembly 30.

**Claims**

1. A computer implemented method for determining temperature information, or information related to temperature information, related to a static electric induction device assembly (10), said static electric induction device assembly (10) having a vertical extension in a vertical direction (z),

   said static electric induction device assembly (10) comprising an enclosure (12), a static electric induction device (14) and a liquid (16), whereby said enclosure (12) accommodates said static electric induction device (14) and said liquid (16) such that said static electric induction device (14) is at least partially, preferably fully, submerged into said liquid (16), wherein said static electric induction device (14) comprises a static electric induction device portion (20) which is submerged into said liquid (16), said static electric induction device assembly (10) further comprising an enclosing member (22),
   said static electric induction device (14) being at least partially enclosed by said enclosing member (22), wherein at least one cooling duct (24) is formed between said static electric induction device (14) and said enclosing member (22) and/or wherein said at least one cooling duct (24) extends at least partially through said static electric induction device (14), said at least one cooling duct (24) being at least partially delimited by said static electric induction device portion (20), said at least one cooling duct (24) comprising a lower inlet (26) and an upper outlet (28), as seen in said vertical direction (z), wherein each one of said lower inlet (26) and said upper outlet (28) is in fluid communication with said liquid (16), said at least one cooling duct (24) being adapted to convey said liquid (16) from said lower inlet (26) to said upper outlet (28), wherein said method comprises determining a liquid pressure difference ($\Delta$p) between a liquid pressure at said upper outlet (28) and a liquid pressure at said lower inlet (26), wherein said method comprises performing the following for at least said static electric induction device portion (20):

- determining a heat loss value (Q), indicative of a heat loss for said static electric induction device portion (20), said static electric induction device portion (20) having a vertical static electric induction device portion position ($z_{port}$) in said vertical direction (z);
- determining a liquid temperature value ($T_{liq}(z_{port})$), indicative of a temperature of the liquid (16) in said vertical static electric induction device portion position ($z_{port}$), and
- determining a temperature ($T_{port}$), or information related to temperature information, of said static electric induction device portion (20) using said liquid pressure difference ($\Delta$p), said heat loss value (Q) and said liquid temperature value ($T_{liq}(z_{port})$).

2. The method according to claim 1, wherein said method comprises determining a temperature profile indicative of a temperature ($T_{liq}$) of said liquid (16) inside said enclosure (12) but outside said enclosing member (22) at a plurality of different vertical positions between an upper outlet vertical position ($z_{upper}$) of said upper outlet (28) and a lower inlet vertical position ($z_{lower}$) of said lower inlet (26).

3. The method according to claim 2, wherein said step of determining said liquid temperature value ($T_{liq}(z_{port})$) comprises using said temperature profile and said vertical static electric induction device portion position ($z_{port}$) in said vertical direction (z) of said static electric induction device portion (20).

4. The method according to claim 2 or claim 3, wherein said feature of determining said temperature profile comprises using a plurality of temperature sensors (32, 34, 36, 38, 40) arranged inside said enclosure (12) but outside said enclosing member (22) between said upper outlet (28) vertical position and said lower inlet (26) vertical position.

5. The method according to claim 2 or claim 3, wherein said feature of determining said temperature profile comprises the following:

- determining measured temperature data using a measurement assembly, said measured temperature data comprising a temperature in each one of a plurality of different locations of said static electric induction device assembly (10) as a function of time for a reference time range when the static electric induction device assembly (10) is in a condition in which at least a portion of said static electric induction device (14) generates heat during at least a portion of said reference time range,
- generating a temperature model for estimated temperature data, said estimated temperature data corresponding to an estimated temperature in each one of said plurality of different locations of the static electric induction device assembly (10) as a function of time, said temperature model comprising a learning model representing said estimated temperature data as well as said measured temperature data, and
- training said learning model using said measured temperature data to thereby obtain said temperature model, and
- determining said temperature profile using said temperature model.

6. The method according to claim 5, wherein said learning model comprises a neural network, preferably a multilayer neural network.

7. The method according to claim 5 or claim 6, wherein said measurement assembly comprises a fibre optic sensor (42) that is located within said enclosing member (22), preferably said static electric induction device (14) comprises a winding (44) and said fibre optic sensor (42) is at least partially located in said winding (44).

8. The method according to any one of claims 2 to 7, wherein said step of determining said liquid pressure difference ($\Delta$p) between said liquid pressure at said upper outlet (28) and said liquid pressure at said lower inlet (26) comprises using said temperature profile and information relating to a density ($\delta(T(z))$) of said liquid (16) as a function of temperature.

9. The method according to any one of the preceding claims, wherein said method comprises determining a fluid flow rate ($Q_v$) of said liquid (16) flowing in said at least one cooling duct (24) on the basis of said liquid pressure difference ($\Delta$p) and a factor (k) indicative of the flow resistance of said duct.

10. The method according to any one of the preceding claims, wherein said step of determining said heat loss value (Q) comprises determining a value indicative of an electric power (P) fed to said static electric induction device portion (20).

11. The method according to any one of claims 9 - 10, wherein said step of determining said temperature of said static electric induction device portion (20) using said liquid pressure difference ($\Delta p$), said heat loss value (Q) and said liquid temperature value ($T_{liq}(z_{port})$) comprises determining a heat transfer coefficient (h) between said static electric induction device portion (20) and said liquid (16), said heat transfer coefficient (h) being a function of said fluid flow rate, wherein said temperature of said static electric induction device portion (20) is determined as the sum of said liquid temperature value ($T_{liq}(z_{port})$) and a parameter proportional to the ratio between said heat loss value (Q) and said heat transfer coefficient (h).

12. The method according to any one of the preceding claims, wherein said static electric induction device (14) comprises a winding (44), wherein said static electric induction device portion (20) is a portion of said winding (44), preferably said winding comprises a plurality of discs (46, 48) and said method comprises performing the method according to any one of the preceding claims for each one of a set of discs of said plurality of discs (46, 48).

13. The method according to any one of the preceding claims, wherein said static electric induction device portion (20) is associated with an area of said static electric induction device (14) with a relatively high temperature in comparison to its surroundings.

14. A computer program product comprising program code for performing, when executed by a processor device, the method of any one of claims 1 - 13.

15. A control unit (50) arranged to perform the method of any one of claims 1-13.


**Patentansprüche**

1. Temperaturinformationen in Bezug auf eine statische elektrische Induktionsvorrichtungsbaugruppe (10), wobei die statische elektrische Induktionsvorrichtungsbaugruppe (10) eine vertikale Ausdehnung in einer vertikalen Richtung (z) aufweist, wobei die statische elektrische Induktionsvorrichtungsbaugruppe (10) ein Gehäuse (12), eine statische elektrische Induktionsvorrichtung (14) und eine Flüssigkeit (16) umfasst, wobei das Gehäuse (12) die statische elektrische Induktionsvorrichtung (14) und die Flüssigkeit (16) aufnimmt, derart, dass die statische elektrische Induktionsvorrichtung (14) zumindest teilweise, vorzugsweise vollständig, in der Flüssigkeit (16) versenkt ist, wobei die statische elektrische Induktionsvorrichtung (14) einen Abschnitt (20) der statischen elektrischen Induktionsvorrichtung umfasst, der in der Flüssigkeit (16) versenkt ist, wobei die statische elektrische Induktionsvorrichtungsbaugruppe (10) ferner ein umschließendes Element (22) umfasst, wobei die statische elektrische Induktionsvorrichtung (14) zumindest teilweise durch das umschließende Element (22) umschlossen ist, wobei mindestens eine Kühlleitung (24) zwischen der statischen elektrischen Induktionsvorrichtung (14) und dem umschließenden Element (22) gebildet ist und/oder wobei sich die mindestens eine Kühlleitung (24) zumindest teilweise durch die statische elektrische Induktionsvorrichtung (14) erstreckt, wobei die mindestens eine Kühlleitung (24) zumindest teilweise durch den Abschnitt (20) der statischen elektrischen Induktionsvorrichtung begrenzt wird, wobei die mindestens eine Kühlleitung (24) in der vertikalen Richtung (z) betrachtet einen unteren Einlass (26) und einen oberen Auslass (28) umfasst, wobei sich jeder des unteren Einlasses (26) und des oberen Auslasses (28) mit der Flüssigkeit (16) in Fluidverbindung befindet, wobei die mindestens eine Kühlleitung (24) ausgelegt ist, die Flüssigkeit (16) vom unteren Einlass (26) zum oberen Auslass (28) zu befördern, wobei das Verfahren das Bestimmen einer Flüssigkeitsdruckdifferenz ($\Delta p$) zwischen einem Flüssigkeitsdruck am oberen Auslass (28) und einem Flüssigkeitsdruck am unteren Einlass (26) umfasst, wobei das Verfahren das Durchführen des Folgenden zumindest für den Abschnitt (20) der statischen elektrischen Induktionsvorrichtung umfasst:

   - Bestimmen eines Wärmeverlustwertes (Q), der einen Wärmeverlust für den Abschnitt (20) der statischen elektrischen Induktionsvorrichtung angibt, wobei der Abschnitt (20) der statischen elektrischen Induktionsvorrichtung eine vertikale Position ($z_{port}$) des Abschnitts der statischen elektrischen Induktionsvorrichtung in der vertikalen Richtung (z) aufweist;
   - Bestimmen eines Flüssigkeitstemperaturwertes ($T_{liq}(z_{port})$), der eine Temperatur der Flüssigkeit (16) an der vertikalen Position ($z_{port}$) des Abschnitts der statischen elektrischen Induktionsvorrichtung angibt, und
   - Bestimmen einer Temperatur ($T_{port}$) oder von Informationen bezüglich Temperaturinformationen des Abschnitts (20) der statischen elektrischen Induktionsvorrichtung unter Verwendung der Flüssigkeitsdruckdifferenz ($\Delta$p), des Wärmeverlustwertes (Q) und des Flüssigkeitstemperaturwertes ($T_{liq}(z_{port})$).

2. Verfahren nach Anspruch 1, wobei das Verfahren das Bestimmen eines Temperaturprofils umfasst, das eine Temperatur ($T_{liq}$) der Flüssigkeit (16) im Inneren des Gehäuses (12), jedoch außerhalb des umschließenden Elements (22) an mehreren verschiedenen vertikalen Positionen zwischen einer vertikalen Position ($z_{upper}$) des oberen Auslasses des oberen Auslasses (28) und einer vertikalen Position ($z_{lower}$) des unteren Einlasses des unteren Einlasses (26) angibt.

3. Verfahren nach Anspruch 2, wobei der Schritt des Bestimmens des Flüssigkeitstemperaturwertes ($T_{liq}(z_{port})$) das Verwenden des Temperaturprofils und der vertikalen Position ($z_{port}$) des Abschnitts der statischen elektrischen Induktionsvorrichtung in der vertikalen Richtung (z) des Abschnitts (20) der statischen elektrischen Induktionsvorrichtung umfasst.

4. Verfahren nach Anspruch 2 oder Anspruch 3, wobei das Merkmal des Bestimmens des Temperaturprofils das Verwenden mehrerer Temperatursensoren (32, 34, 36, 38, 40), die im Inneren des Gehäuses (12), jedoch außerhalb des umschließenden Elements (22) zwischen der vertikalen Position des oberen Auslasses (28) und der vertikalen Position des unteren Einlasses (26) angeordnet sind, umfasst.

5. Verfahren nach Anspruch 2 oder Anspruch 3, wobei das Merkmal des Bestimmens des Temperaturprofils Folgendes umfasst:

- Bestimmen von gemessenen Temperaturdaten unter Verwendung einer Messanordnung, wobei die gemessenen Temperaturdaten eine Temperatur an jedem von mehreren verschiedenen Orten der statischen elektrischen Induktionsvorrichtungsbaugruppe (10) als eine Funktion der Zeit für einen Referenzzeitbereich, wenn sich die statische elektrische Induktionsvorrichtungsbaugruppe (10) in einem Zustand befindet, in dem zumindest ein Abschnitt der statischen elektrischen Induktionsvorrichtung (14) zumindest während eines Abschnitts des Referenzzeitbereichs Wärme erzeugt, umfassen,
- Erzeugen eines Temperaturmodells für geschätzte Temperaturdaten, wobei die geschätzten Temperaturdaten einer geschätzten Temperatur an jedem der mehreren verschiedenen Orte der statischen elektrischen Induktionsvorrichtungsbaugruppe (10) als eine Funktion der Zeit entsprechen, wobei das Temperaturmodell ein Lernmodell umfasst, das die geschätzten Temperaturdaten sowie die gemessenen Temperaturdaten darstellt, und
- Trainieren des Lernmodells unter Verwendung der gemessenen Temperaturdaten, um dadurch das Temperaturmodell zu erhalten, und
- Bestimmen des Temperaturprofils unter Verwendung des Temperaturmodells.

6. Verfahren nach Anspruch 5, wobei das Lernmodell ein neuronales Netz, vorzugsweise ein mehrschichtiges neuronales Netz, umfasst.

7. Verfahren nach Anspruch 5 oder Anspruch 6, wobei die Messanordnung einen Lichtleiterfasersensor (42) umfasst, der im umschließenden Element (22) angeordnet ist, wobei die statische elektrische Induktionsvorrichtung (14) vorzugsweise eine Wicklung (44) umfasst und der Lichtleiterfasersensor (42) zumindest teilweise in der Wicklung (44) angeordnet ist.

8. Verfahren nach einem der Ansprüche 2 bis 7, wobei der Schritt des Bestimmens der Flüssigkeitsdruckdifferenz ($\Delta$p) zwischen dem Flüssigkeitsdruck am oberen Auslass (28) und dem Flüssigkeitsdruck am unteren Einlass (26) das Verwenden des Temperaturprofils und von Informationen bezüglich einer Dichte ($\delta(T(z))$) der Flüssigkeit (16) als eine Funktion der Temperatur umfasst.

9. Verfahren nach einem der vorhergehenden Ansprüche, wobei das Verfahren das Bestimmen einer Fluiddurchflussmenge ($Q_v$) der Flüssigkeit (16), die in der mindestens einen Kühlleitung (24) strömt, auf der Grundlage der Flüssigkeitsdruckdifferenz ($\Delta$p) und eines Faktors (k), der den Strömungswiderstand der Leitung angibt, umfasst.

10. Verfahren nach einem der vorhergehenden Ansprüche, wobei der Schritt des Bestimmens des Wärmeverlustwertes (Q) das Bestimmen eines Wertes, der eine elektrische Leistung (P) angibt, die dem Abschnitt (20) der statischen elektrischen Induktionsvorrichtung zugeführt wird, umfasst.

**11.** Verfahren nach einem der Ansprüche 9-10, wobei der Schritt des Bestimmens der Temperatur des Abschnitts (20) der statischen elektrischen Induktionsvorrichtung unter Verwendung der Flüssigkeitsdruckdifferenz ($\Delta p$), des Wärmeverlustwertes (Q) und des Flüssigkeitstemperaturwertes ($T_{liq}(z_{port})$) das Bestimmen eines Wärmeübertragungskoeffizienten (h) zwischen dem Abschnitt (20) der statischen elektrischen Induktionsvorrichtung und der Flüssigkeit (16) umfasst, wobei der Wärmeübertragungskoeffizient (h) eine Funktion der Fluiddurchflussmenge ist, wobei die Temperatur des Abschnitts (20) der statischen elektrischen Induktionsvorrichtung als die Summe des Flüssigkeitstemperaturwertes ($T_{liq}(z_{port})$) und eines Parameters, der zu dem Verhältnis zwischen dem Wärmeverlustwert (Q) und dem Wärmeübertragungskoeffizienten (h) proportional ist, bestimmt wird.

**12.** Verfahren nach einem der vorhergehenden Ansprüche, wobei die statische elektrische Induktionsvorrichtung (14) eine Wicklung (44) umfasst, wobei der Abschnitt (20) der statischen elektrischen Induktionsvorrichtung ein Abschnitt der Wicklung (44) ist, wobei die Wicklung vorzugsweise mehrere Scheiben (46, 48) umfasst und das Verfahren das Durchführen des Verfahrens nach einem der vorhergehenden Ansprüche für jede einer Gruppe von Scheiben der mehreren Scheiben (46, 48) umfasst.

**13.** Verfahren nach einem der vorhergehenden Ansprüche, wobei der Abschnitt (20) der statischen elektrischen Induktionsvorrichtung einem Bereich der statischen elektrischen Induktionsvorrichtung (14) mit einer relativ hohen Temperatur im Vergleich zu ihrer Umgebung zugeordnet ist.

**14.** Computerprogrammprodukt, das Programmcode enthält, um dann, wenn er durch eine Prozessorvorrichtung ausgeführt wird, das Verfahren nach einem der Ansprüche 1-13 auszuführen.

**15.** Steuereinheit (50), die ausgelegt ist, das Verfahren nach einem der Ansprüche 1-13 auszuführen.

**Revendications**

**1.** Procédé, mis en œuvre par ordinateur, de détermination d'informations de température, ou d'informations relatives à des

informations de température, relatives à un ensemble (10) de dispositif à induction électrostatique, ledit ensemble (10) de dispositif à induction électrostatique présentant une étendue verticale dans une direction verticale (z),
ledit ensemble (10) de dispositif à induction électrostatique comprenant une enceinte (12), un dispositif à induction électrostatique (14) et un liquide (16), de sorte que ladite enceinte (12) accueille ledit dispositif à induction électrostatique (14) et ledit liquide (16) de manière à ce que ledit dispositif à induction électrostatique (14) soit au moins partiellement, de préférence entièrement, immergé dans ledit liquide (16), ledit dispositif à induction électrostatique (14) comprenant une partie (20) de dispositif à induction électrostatique immergée dans ledit liquide (16), ledit ensemble (10) de dispositif à induction électrostatique comprenant en outre un élément de confinement (22),
ledit dispositif à induction électrostatique (14) étant au moins en partie confiné par ledit élément de confinement (22), au moins un conduit de refroidissement (24) étant ménagé entre ledit dispositif à induction électrostatique (14) et ledit élément de confinement (22) et/ou ledit au moins un conduit de refroidissement (24) s'étendant au moins en partie au travers dudit dispositif à induction électrostatique (14), ledit au moins un conduit de refroidissement (24) étant au moins en partie délimité par ladite partie (20) de dispositif à induction électrostatique, ledit au moins un conduit de refroidissement (24) comprenant une entrée inférieure (26) et une sortie supérieure (28), vues selon ladite direction verticale (z), ladite entrée inférieure (26) et ladite sortie supérieure (28) étant chacune en communication fluidique avec ledit liquide (16), ledit au moins un conduit de refroidissement (24) étant adapté à acheminer ledit liquide (16) depuis ladite entrée inférieure (26) vers ladite sortie supérieure (28), ledit procédé comprenant la détermination d'une différence de pression de liquide ($\Delta p$) entre une pression de liquide à ladite sortie supérieure (28) et une pression de liquide à ladite entrée inférieure (26), ledit procédé comprenant la réalisation de ce qui suit pour au moins ladite partie (20) de dispositif à induction électrostatique :

- la détermination d'une valeur de perte de chaleur (Q), indiquant une perte de chaleur pour ladite partie (20) de dispositif à induction électrostatique, ladite partie (20) de dispositif à induction électrostatique occupant une position verticale de partie de dispositif à induction électrostatique ($z_{port}$) dans ladite direction verticale (z) ;

- la détermination d'une valeur de température de liquide ($T_{liq}(z_{port})$) indiquant une température du liquide (16) à ladite position verticale de partie de dispositif à induction électrostatique ($z_{port}$), et
- la détermination d'une température ($T_{port}$), ou d'informations relatives à des informations de température, de ladite partie (20) de dispositif à induction électrostatique à l'aide de ladite différence de pression de liquide ($\Delta p$), de ladite valeur de perte de chaleur (Q) et de ladite valeur de température de liquide ($T_{liq}(z_{port})$).

2. Procédé selon la revendication 1, ledit procédé comprenant la détermination d'un profil de température indiquant une température ($T_{liq}$) dudit liquide (16) à l'intérieur de ladite enceinte (12) mais à l'extérieur dudit élément de confinement (22) à une pluralité de positions verticales différentes entre une position verticale de sortie supérieure ($z_{upper}$) de ladite sortie supérieure (28) et une position verticale d'entrée inférieure ($z_{lower}$) de ladite entrée inférieure (26).

3. Procédé selon la revendication 2, dans lequel ladite étape de détermination de ladite valeur de température de liquide ($T_{liq}(z_{port})$) comprend l'utilisation dudit profil de température et de ladite position verticale de partie de dispositif à induction électrostatique ($z_{port}$) dans ladite direction verticale (z) de ladite partie (20) de dispositif à induction électrostatique.

4. Procédé selon la revendication 2 ou la revendication 3, dans lequel ladite étape de détermination dudit profil de température comprend l'utilisation d'une pluralité de capteurs de température (32, 34, 36, 38, 40) agencés à l'intérieur de ladite enceinte (12) mais à l'extérieur dudit élément de confinement (22) entre ladite position verticale de sortie supérieure (28) et ladite position verticale d'entrée inférieure (26).

5. Procédé selon la revendication 2 ou la revendication 3, dans lequel ladite étape de détermination dudit profil de température comprend ce qui suit :

- la détermination de données de température mesurée à l'aide d'un ensemble de mesure, lesdites données de température mesurée comprenant une température à chacun d'une pluralité d'endroits différents dudit ensemble (10) de dispositif à induction électrostatique en fonction du temps pour une plage temporelle de référence lorsque l'ensemble (10) de dispositif à induction électrostatique se trouve dans un état dans lequel au moins une partie dudit dispositif à induction électrostatique (14) génère de la chaleur pendant au moins une partie de ladite plage temporelle de référence,
- la génération d'un modèle de température pour des données de température estimée, lesdites données de température estimée correspondant à une température estimée à chacun de ladite pluralité d'endroits différents de l'ensemble (10) de dispositif à induction électrostatique en fonction du temps, ledit modèle de température comprenant un modèle d'apprentissage représentant lesdites données de température estimée ainsi que lesdites données de température mesurée, et
- l'entraînement dudit modèle d'apprentissage à l'aide desdites données de température mesurée pour ainsi obtenir ledit modèle de température, et
- la détermination dudit profil de température à l'aide dudit modèle de température.

6. Procédé selon la revendication 5, dans lequel ledit modèle d'apprentissage comprend un réseau de neurones, de préférence un réseau de neurones multicouche.

7. Procédé selon la revendication 5 ou la revendication 6, dans lequel ledit ensemble de mesure comprend un capteur à fibre optique (42) qui est situé à l'intérieur dudit élément de confinement (22), de préférence ledit dispositif à induction électrostatique (14) comprend un enroulement (44) et ledit capteur à fibre optique (42) est au moins en partie situé dans ledit enroulement (44).

8. Procédé selon l'une quelconque des revendications 2 à 7, dans lequel ladite étape de détermination de ladite différence de pression de liquide ($\Delta p$) entre ladite pression de liquide à ladite sortie supérieure (28) et ladite pression de liquide à ladite entrée inférieure (26) comprend l'utilisation dudit profil de température et d'informations relatives à une densité ($\delta(T(z))$) dudit liquide (16) en fonction de la température.

9. Procédé selon l'une quelconque des revendications précédentes, ledit procédé comprenant la détermination d'un débit de fluide ($Q_v$) dudit liquide (16) s'écoulant dans ledit au moins un conduit de refroidissement (24) sur la base de ladite différence de pression de liquide ($\Delta p$) et d'un facteur (k) indiquant la résistance à l'écoulement dudit conduit.

10. Procédé selon l'une quelconque des revendications précédentes, dans lequel ladite étape de détermination de ladite valeur de perte de chaleur (Q) comprend la détermination d'une valeur indiquant une puissance électrique (P) fournie à ladite partie (20) de dispositif à induction électrostatique.

11. Procédé selon l'une quelconque des revendications 9 à 10, dans lequel ladite étape de détermination de ladite température de ladite partie (20) de dispositif à induction électrostatique à l'aide de ladite différence de pression de liquide ($\Delta p$), de ladite valeur de perte de chaleur (Q) et de ladite valeur de température de liquide ($T_{liq}(z_{port})$) comprend la détermination d'un coefficient de transfert de chaleur (h) entre ladite partie (20) de dispositif à induction électrostatique et ledit liquide (16), ledit coefficient de transfert de chaleur (h) étant fonction dudit débit de fluide, ladite température de ladite partie (20) de dispositif à induction électrostatique étant déterminée comme la somme de ladite valeur de température de liquide ($T_{liq}(z_{port})$) et d'un paramètre proportionnel au rapport entre ladite valeur de perte de chaleur (Q) et ledit coefficient de transfert de chaleur (h).

12. Procédé selon l'une quelconque des revendications précédentes, dans lequel ledit dispositif à induction électrostatique (14) comprend un enroulement (44), ladite partie (20) de dispositif à induction électrostatique constituant une partie dudit enroulement (44), de préférence ledit enroulement comprenant une pluralité de disques (46, 48) et ledit procédé comprenant la réalisation du procédé selon l'une quelconque des revendications précédentes pour chacun d'un ensemble de disques de ladite pluralité de disques (46, 48).

13. Procédé selon l'une quelconque des revendications précédentes, dans lequel ladite partie (20) de dispositif à induction électrostatique est associée à une zone dudit dispositif à induction électrostatique (14) présentant une température relativement élevée par rapport à son milieu environnant.

14. Produit-programme d'ordinateur comprenant un code de programme destiné à réaliser, lorsqu'il est exécuté par un dispositif processeur, le procédé selon l'une quelconque des revendications 1 à 13.

15. Unité de commande (50) conçue pour réaliser le procédé selon l'une quelconque des revendications 1 à 13.

Fig. 1

Fig. 2

EP 4 435 396 B1

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105550472 A